# EUROPEAN PATENT APPLICATION

(11) **EP 4 506 186 A1**
(43) Date of publication of application: **12.02.2025**
(21) Application number: 24192792.0
(22) Date of filing: 05.08.2024
(51) Int. Cl.: B60C 11/24, B60C 23/04, B60C 19/00, G01M 17/02, G06Q 10/20

(54) **TIRE MAINTENANCE SUPPORT PROGRAM**

(30) Priority: 10.08.2023 JP 2023131337; 10.08.2023 JP 2023131338; 10.08.2023 JP 2023131339
(71) Applicant: Toyo Tire Corporation, Itami-shi, Hyogo 664-0847 (JP)
(72) Inventor: KURITANI, Koutarou, Itami-shi, Hyogo, 6640847 (JP)
(74) Representative: Müller-Boré & Partner Patentanwälte PartG mbB

(57) **Abstract**

A tire maintenance support program includes: an information addition module, a graphic arrangement module, a user operation reception module, and a graphic movement module. The information addition module adds, to a tire graphic (6), identification information on the tire, and adds, to a sensor graphic (7), identification information on the sensor. The graphic arrangement module arranges the tire graphic (6) and the sensor graphic (7) in the display screen based on axle arrangement information. The user operation reception module receives a user operation to move at least one of the tire graphic (6) or the sensor graphic (7) arranged by the graphic arrangement module. The graphic movement module moves at least one of the tire graphic (6) or the sensor graphic (7) according to a mounting position on an axle based on a user operation received by the user operation reception module.

## Description

The present disclosure relates to a tire maintenance support program and a tire maintenance support apparatus that support maintenance of tires mounted on a vehicle.

Generally, tire wear progresses depending on the traveling condition, travel distance, etc., and an uneven wear may occur depending on the on-axle position where the tire is mounted. Tire rotation to switch on-axle positions in a vehicle or between vehicles reduces uneven wear and maintains tires for longer use. In addition, a tire in which the wear has progressed until only a small groove depth remains is changed to a tire having a sufficient remaining groove depth.

Patent Literature 1 describes a related-art tire management system. The tire management system includes a tire information acquisition unit, a sensor information acquisition unit, and a management unit. The tire information acquisition unit acquires identification information on tires mounted on a vehicle. The sensor information acquisition unit acquires identification information on a sensor provided in the tire. The management unit associates and stores the identification information on the tire acquired by the tire information acquisition unit and the identification information on the sensor acquired by the sensor information acquisition unit.

Patent Literature 1: Japanese Unexamined Patent Application Publication No. 2021-075243

The tire management system according to Patent Literature 1 associates and manages the identification information on the tire and the identification information on the sensor. We have considered that the related-art tire maintenance work such as actual tire rotation and tire replacement can be improved by identifying a tire to be worked on and simulating maintenance work in an easy-to-understand manner for the purpose of reducing errors in maintenance work and improving work efficiency.

The present disclosure addresses the issue described above, and a purpose thereof is to provide a tire maintenance support program and a tire maintenance support apparatus capable of reducing errors in tire maintenance work and improving work efficiency.

A tire maintenance support program includes computer-implemented modules including: an information addition module that adds, to a tire graphic representing a tire mounted on a vehicle, identification information on the tire, and adds, to a sensor graphic representing a sensor provided in the tire, identification information on the sensor; a graphic arrangement module that arranges the tire graphic and the sensor graphic in the display screen based on axle arrangement information; a user operation reception module that receives a user operation to move at least one of the tire graphic or the sensor graphic arranged by the graphic arrangement module; and a graphic movement module that moves at least one of the tire graphic or the sensor graphic according to a mounting position of the tire on an axle based on a user operation received by the user operation reception module.

Another embodiment of the present disclosure relates to a tire maintenance support apparatus. The tire maintenance support apparatus includes: an information addition unit that adds, to a tire graphic representing a tire mounted on a vehicle, identification information on the tire, and adds, to a sensor graphic representing a sensor provided in the tire, identification information on the sensor; a graphic arrangement unit that arranges the tire graphic and the sensor graphic in a display screen based on axle arrangement information; a user operation reception unit that receives a user operation to move at least one of the tire graphic or the sensor graphic arranged by the graphic arrangement unit; and a graphic movement unit that moves, based on the user operation received by the user operation reception unit, at least one of the tire graphic or the sensor graphic according to a mounting position of the tire on an axle.

According to the present disclosure, errors in tire maintenance work can be reduced and work efficiency can be improved.

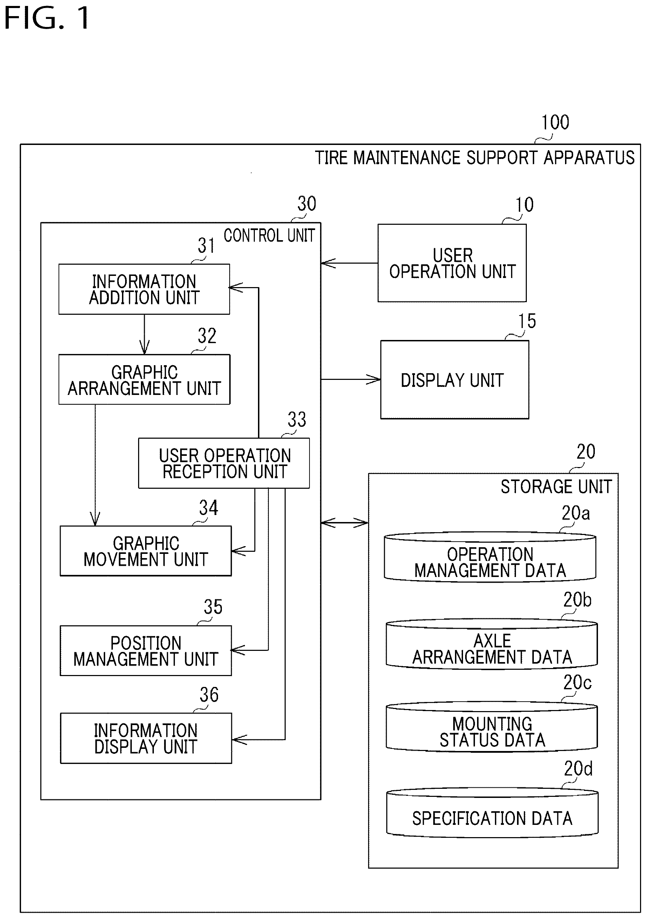

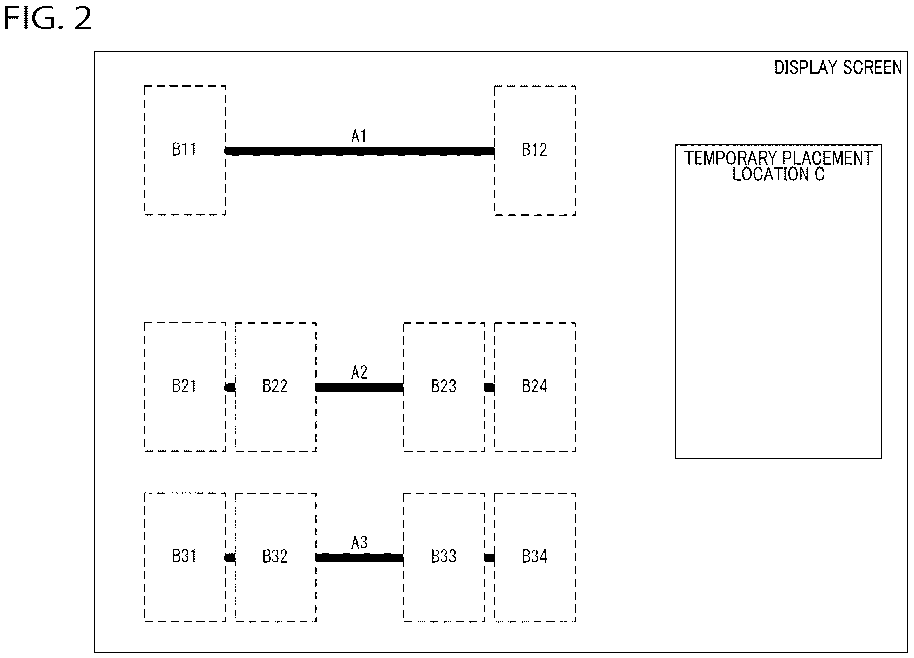

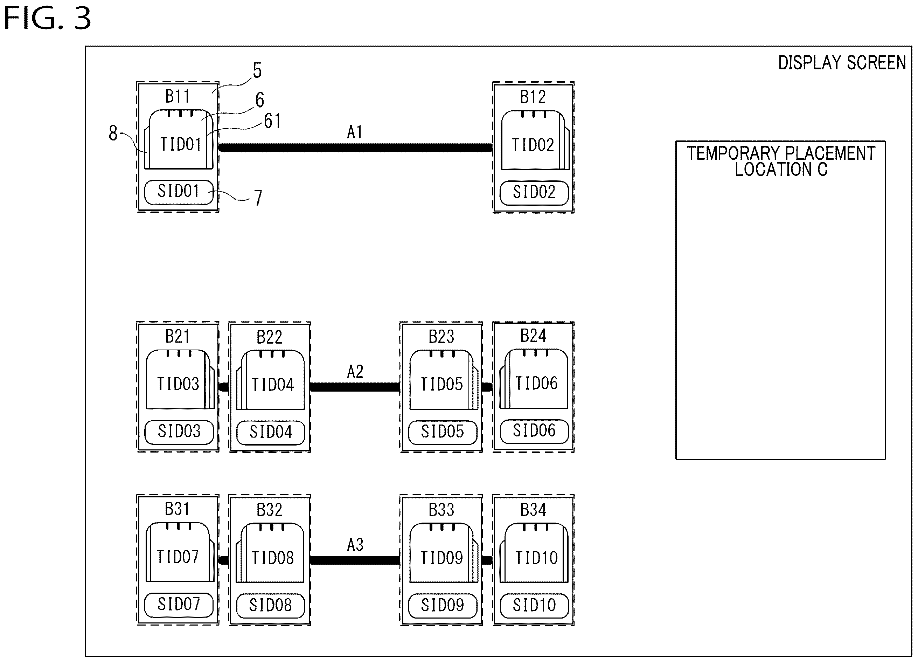

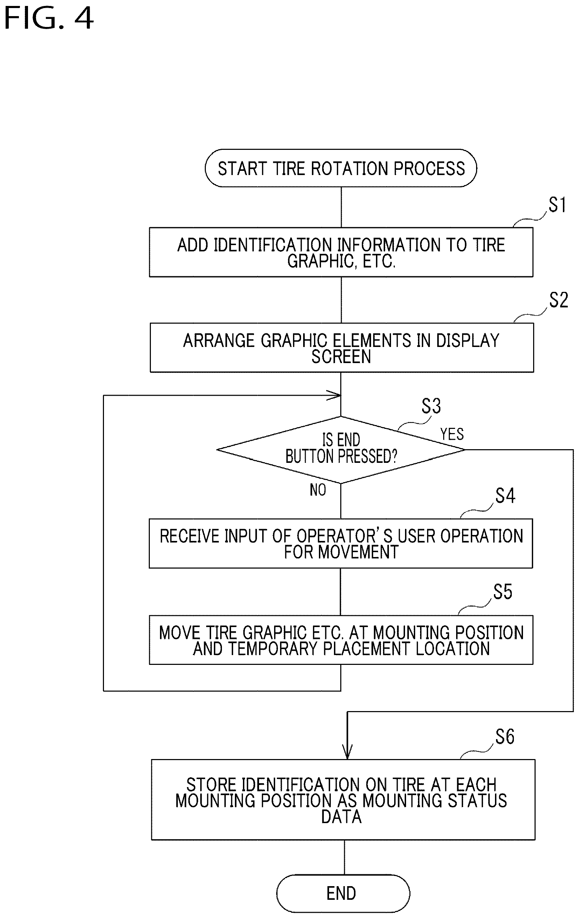

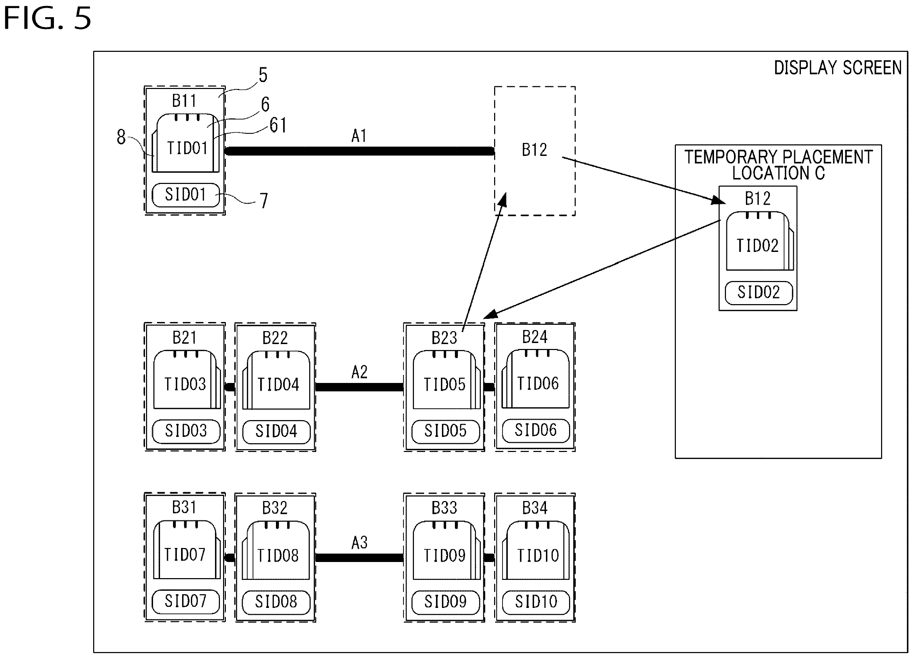

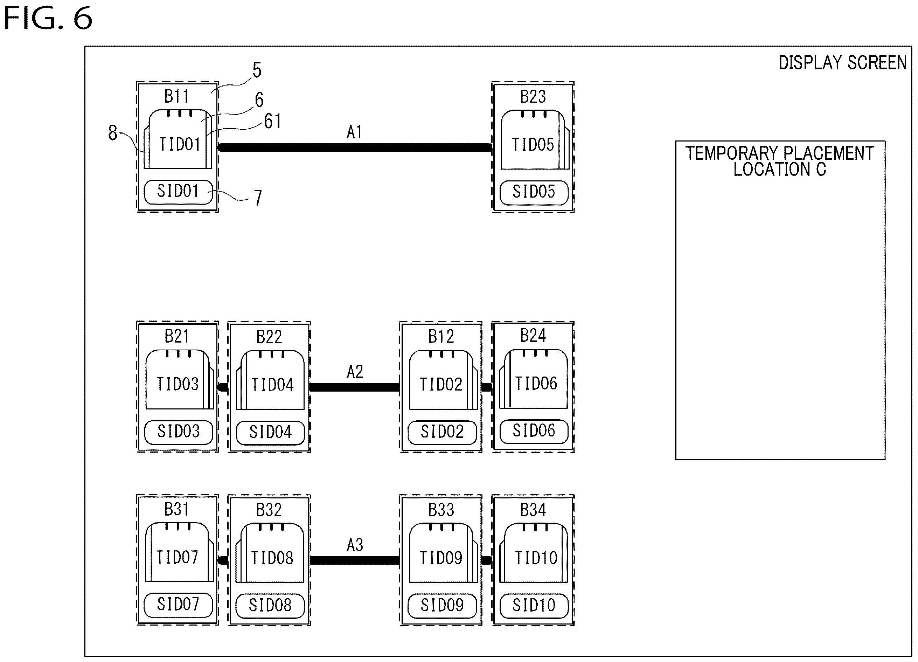

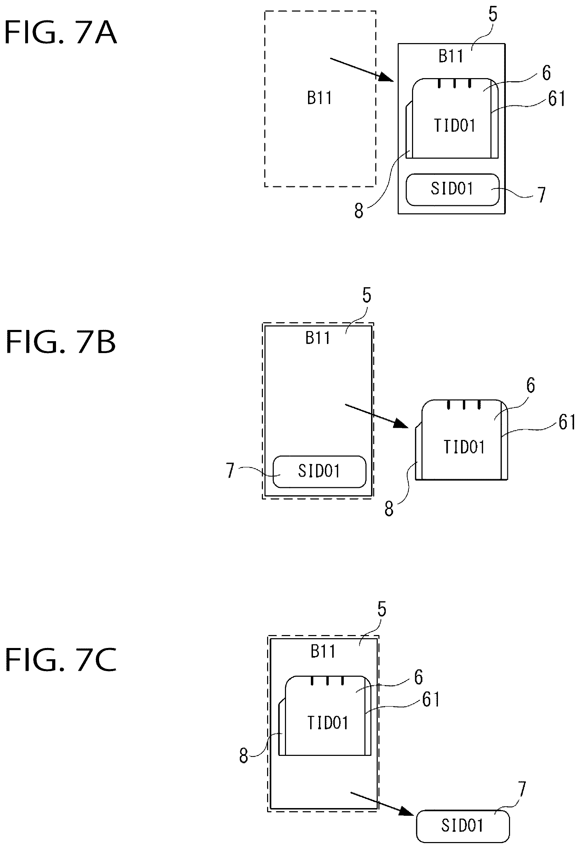

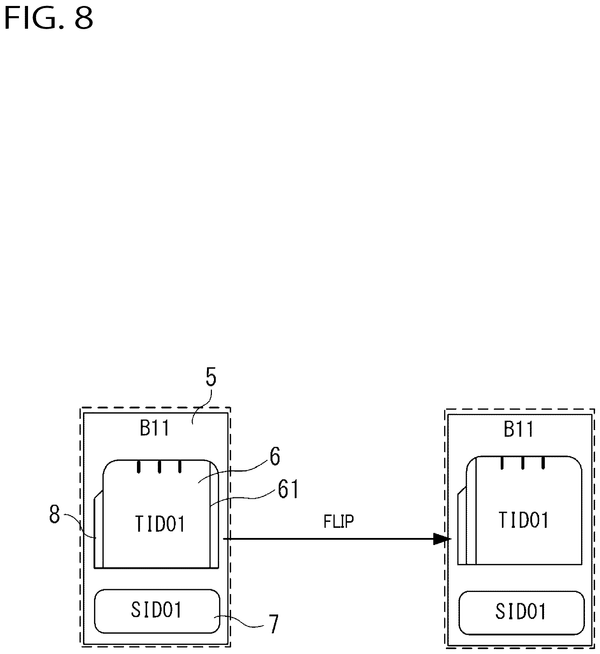

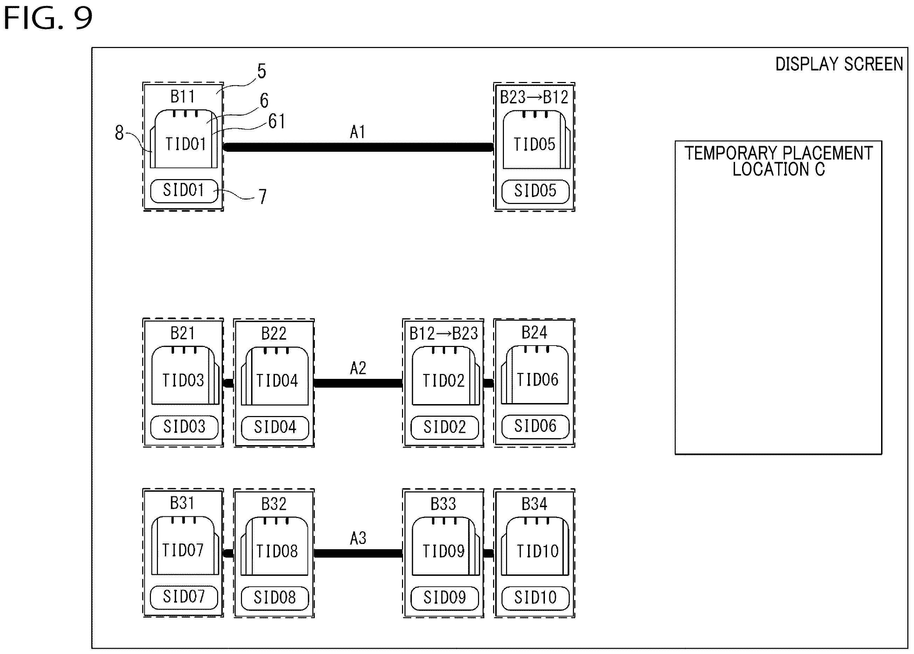

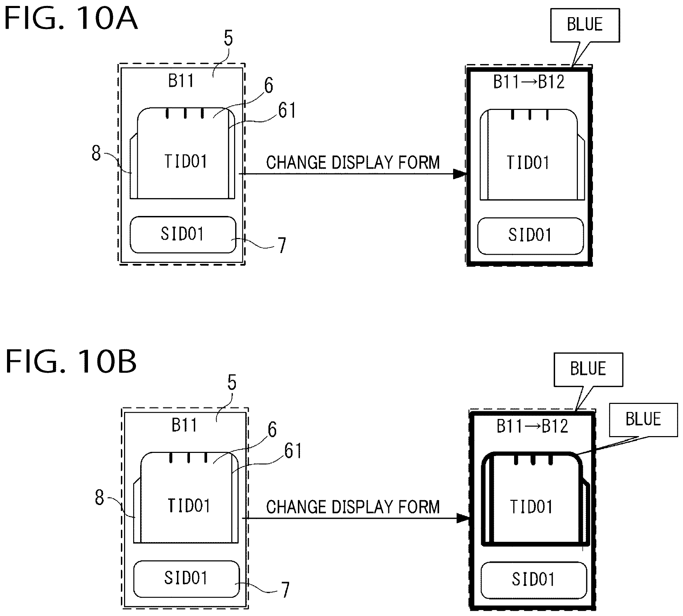

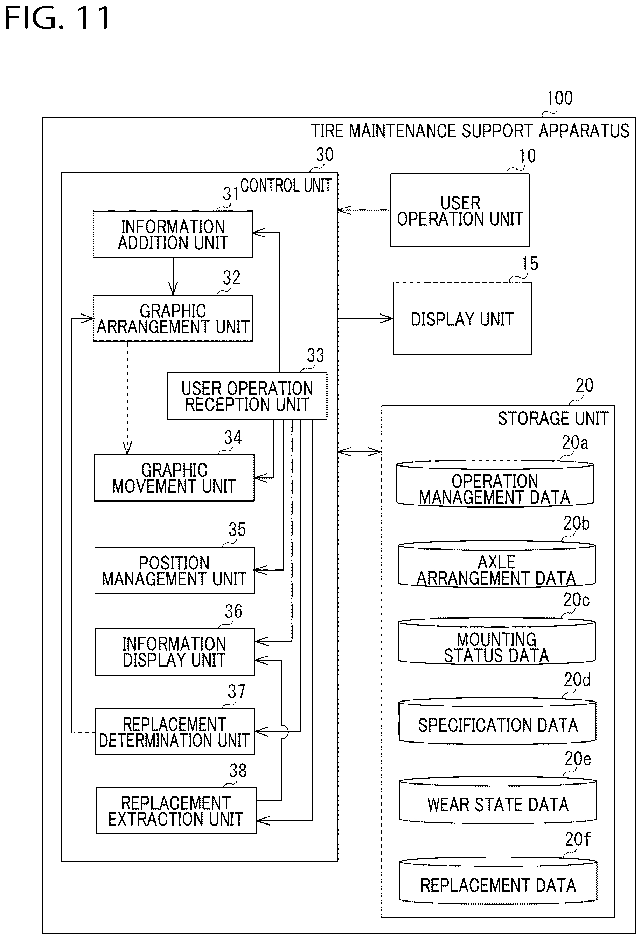

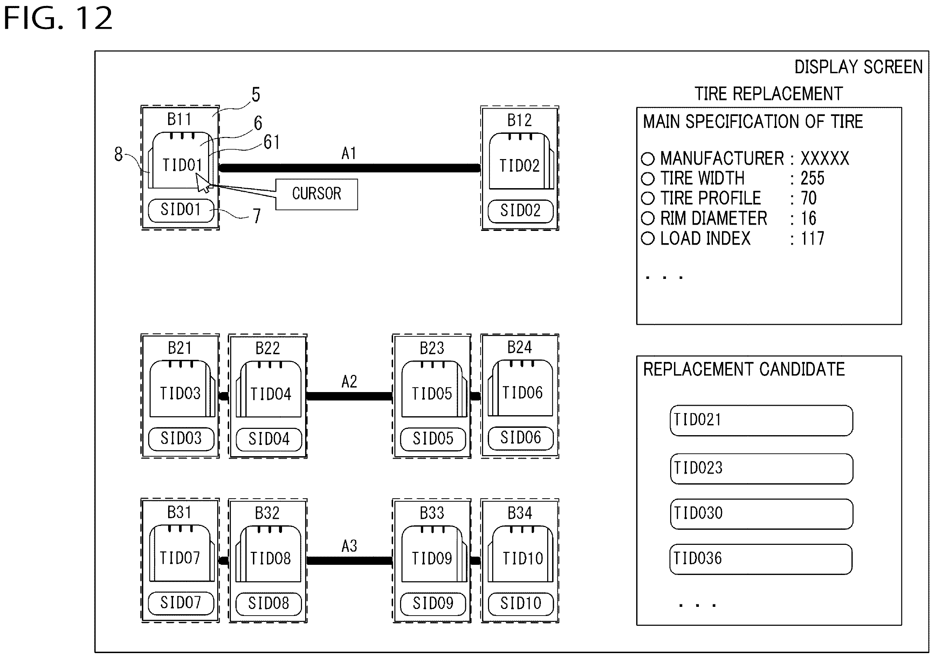

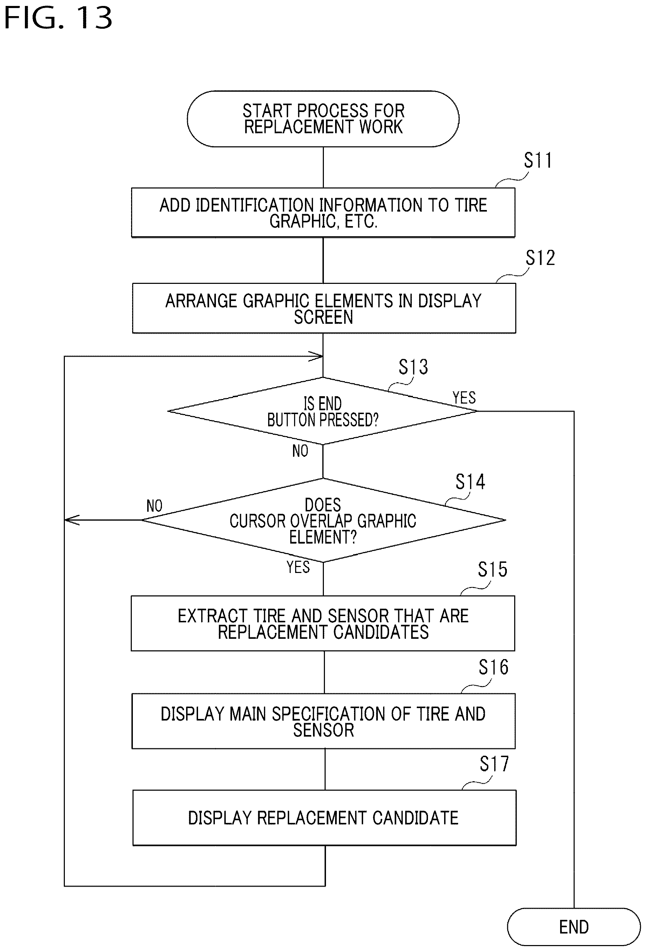

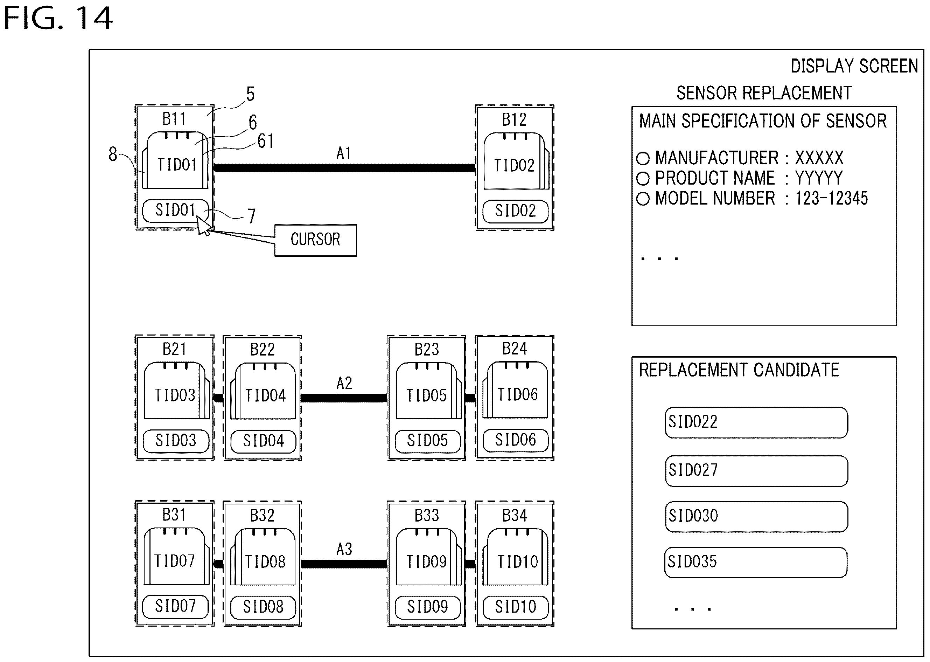

Fig. 1 is a block diagram showing a functional configuration of a tire maintenance support apparatus according to embodiment 1; Fig. 2 is a schematic diagram showing a tire mounting position displayed in the display screen; Fig. 3 is a schematic diagram showing an example of the display screen in which a tire graphic, etc. is arranged; Fig. 4 is a flowchart showing steps of a tire rotation process performed by the tire maintenance support apparatus; Fig. 5 is a schematic diagram showing an example of tire rotation in the display screen; Fig. 6 is a schematic diagram showing an arrangement of a tire graphic, etc. after tire rotation; Figs. 7A, 7B and 7C are schematic diagrams for illustrating a user operation to move graphic elements; Fig. 8 is a schematic diagram for illustrating a user operation of reversing the orientation of a tire; Fig. 9 is a schematic diagram showing an example of a display screen presented when the mounting positions before and after a movement are displayed; Figs. 10A and 10B are schematic diagrams showing an example of changing the display form of the graphic element that has been moved; Fig. 11 is a block diagram showing a functional configuration of the tire maintenance support apparatus according to embodiment 2; Fig. 12 is a schematic diagram showing an example of a display screen for tire replacement work; Fig. 13 is a flowchart showing steps of a process for replacement work performed by the tire maintenance support apparatus; and Fig. 14 is a schematic diagram showing an example of a display screen for sensor exchange.

Hereinafter, the present disclosure will be described based on a preferred embodiment with reference to Figs. 1 through 14. Identical or like constituting elements and members shown in the drawings are represented by identical symbols, and a duplicate description will be omitted as appropriate. The dimension of the members in the drawings shall be enlarged or reduced as appropriate to facilitate understanding. Those of the members that are not material to the description of the embodiments are omitted in the drawings.

(Embodiment 1) Fig. 1 is a block diagram showing a functional configuration of a tire maintenance apparatus 100 according to embodiment 1. The tire maintenance support apparatus 100 includes a user operation unit 10, a display unit 15, a storage unit 20, and a control unit 30. The tire maintenance support apparatus 100 is used in maintenance work such as tire rotation and replacement.

The tire maintenance support apparatus 100 displays images related to the arrangement, movement, and replacement of tires and sensors. The tire maintenance support apparatus 100 displays graphic elements simulating tires and sensors in a display screen, and the graphic element moves according to the operator's user operation. Further, the tire maintenance support apparatus 100 displays information on the tire and the sensor according to the position of a cursor manipulated by the operator in the display screen.

The parts in the tire maintenance apparatus 100 are implemented in hardware such as an electronic processing circuit comprised of an electronic element exemplified by a CPU of a computer, a mechanical component, etc., and in software such as a computer program. Fig. 1 depicts functional blocks implemented by the cooperation of these parts. Therefore, it will be understood by those skilled in the art that the functional blocks may be implemented in a variety of manners by a combination of hardware and software.

The user operation unit 10 is a controllable input apparatus such as a touch panel, a switch, a keyboard, and a mouse. By manipulating the user operation unit 10, the operator moves a graphic representing a tire (hereinafter referred to as a tire graphic) and a graphic representing a sensor (hereinafter referred to as a sensor graphic) displayed on the display unit 15. The operator simulates tire rotation and sensor replacement by moving the tire graphic and the sensor graphic in the display screen.

The display unit 15 is, for example, a display apparatus such as a liquid crystal display. The display unit 15 displays, on the display apparatus, a graphic simulating an axle arrangement, a tire graphic, a sensor graphic, and a graphic of a temporary placement location where a tire removed from an on-axle position for movement is placed. The operator moves the tire graphic while looking at the display screen displayed on the display unit 15.

The storage unit 20 is a storage apparatus comprised of, for example, a solid state drive (SSD), a hard disk, a CD-ROM, a DVC, etc. The storage unit 20 stores a computer program executed in the control unit 30, operation management data 20a, axle arrangement data 20b, mounting status data 20c, specification data 20d, etc.

The operation management data 20a includes, for example, vehicle identification information on one or more transport trucks, etc. operated and managed by, for example, a transportation company. The axle arrangement data 20b is information that includes an axle arrangement and tire mounting positions corresponding to the vehicle identification information. The axle arrangement and tire mounting positions of a vehicle are determined in association with the vehicle name, vehicle model, etc. of the vehicle. The axle arrangement data 20b for a transport truck of a given vehicle name includes information indicating, for example, that three axles are arranged from the front part to the rear part of the vehicle, one tire each is mounted on the left and the right of one tire in the front part, and two tires each are mounted on the left and the right of each of the two axles in the central part and the rear part. In the case of this vehicle, a total of 10 tires are mounted.

The mounting status data 20c includes identification information on a tire mounted at each mounting position of the vehicle corresponding to the vehicle identification information, information indicating the orientation of the serial surface of the tire, identification information on the sensor, and information indicating the orientation of the wheel attached to each tire. One side surface of the two side surfaces of the tire intersecting the width direction of the tire is engraved with serial information such as a serial number, product name, size, tire width, tire profile, etc. of the tire. The surface engraved with serial information such as the serial number of the tire is called a serial surface. The information indicating the orientation of the serial surface of the tire indicates whether the serial surface faces left or right in the vehicle. The information indicating the orientation of the wheel indicates whether the wheel surface faces left or right in the vehicle.

The specification data 20d includes information on the specification of a tire and a sensor. The specification of a tire includes, for example, information on tire performance such as manufacturer, product name, model number, tire size, tire width, tire profile, wear resistance, tire strength, static rigidity, dynamic rigidity, tire outer diameter, load index, and year/month/date of manufacturing. The specification of a sensor includes information such as manufacturer, product name, model number, measurement detail, and year/month/date of manufacturing.

The control unit 30 includes an information addition unit 31, a graphic arrangement unit 32, a user operation reception unit 33, a graphic movement unit 34, a position management unit 35, and an information display unit 36. The control unit 30 is, for example, a CPU (central processing unit). Each part of the control unit 30 functions by loading an application program stored in the storage unit 20 into the CPU and executing a process such as arithmetic operation.

Fig. 2 is a schematic diagram showing a tire mounting position displayed in the display screen, and Fig. 3 is a schematic diagram showing an example of the display screen in which a tire graphic 6, etc. is arranged. The information addition unit 31 reads the axle arrangement and tire mounting position from the axle arrangement data 20b in the storage unit 20, based on the identification information on the vehicle selected by the user. In this process, the operator manipulates the user operation unit 10 to select a vehicle based on the operation management data 20a. The user operation reception unit 33 outputs the identification information on the vehicle selected in the user operation unit 10 to the information addition unit 31.

The information addition unit 31 reads, based on the mounting status data 20c, the identification information on the tire mounted at each mounting position in the vehicle, the information indicating the orientation of the serial surface of the tire, and the identification information on the sensor provided in each tire. The information addition unit 31 adds the identification information on the tire and the sensor to the tire graphic 6 and the sensor graphic 7 arranged in the display screen.

Referring to Fig. 2, the graphic arrangement unit 32 arranges, based on the axle arrangement data 20b, axles A1, A2, and A3 in order, starting from the front of the vehicle in the display screen. The graphic arrangement unit 32 arranges, based on the axle arrangement data 20b, tire mounting positions B11, B12, etc. in each axle. In the example shown in Fig. 2, the axle A1 has two mounting positions B11, B12, the axle A2 has four mounting positions B21, B22, B23, B24, and the axle A3 has four mounting positions B31, B32, B33, B34.

Further, the graphic arrangement unit 32 arranges, in the display screen, a graphic C of a temporary placement location representing a location where the tire graphic 6, etc. is temporarily moved. The operator can simulate tire rotation in an easy-to-understand manner by moving the tire graphic 6, etc. to the graphic of the temporary placement location.

Referring to Fig. 3, the graphic arrangement unit 32 arranges a tire set graphic 5 indicating a tire set comprised of the tire, wheel, and sensor for each tire mounting position. The graphic arrangement unit 32 displays symbols such as B11 and B12 indicating the mounting position inside the tire set graphic 5.

The graphic arrangement unit 32 arranges the tire graphic 6, the sensor graphic 7, and a wheel graphic 8 inside the tire set graphic 5. The graphic arrangement unit 32 displays the identification information on the tire added to the tire graphic 6 by the information addition unit 31 inside the tire graphic 6. The graphic arrangement unit 32 displays the identification information on the sensor added to the sensor graphic 7 by the information addition unit 31 inside the sensor graphic 7. The tire graphic 6 includes a serial surface graphic 61 indicating the orientation of the serial surface of the tire. In the example shown in Fig. 3, the serial surface graphic 61 is shown as line segments, and the serial information is engraved on the side surface of the tire on which the line segments are shown.

The graphic arrangement unit 32 reads information indicating the orientation of the wheel from the mounting status data 20c and arranges the wheel graphic 8 on the side of the tire graphic 6 where the surface of the wheel faces. The side where the surface of the wheel faces is determined according to the mounting position and is consistent with the information indicating the orientation of the wheel in the mounting status data 20c. Referring to Fig. 3, the identification information on the tire is represented by TID01, TID02, etc., and the identification information on the sensor is represented by SID01, SID02, etc.

The user operation reception unit 33 receives a user operation input of the operator in the user operation unit 10. The user operation reception unit 33 receives a user operation to move the tire set graphic 5 at the mounting position in the display screen to the position of the graphic C of the temporary placement location. The user operation reception unit 33 receives a user operation to move the tire set graphic 5 at the mounting position in the display screen to another mounting position where the tire set graphic 5 is not located, and a user operation to move the tire set graphic 5 in the graphic C of the temporary placement location to the mounting position where the tire set graphic 5 is not located.

The user operation reception unit 33 may or may not receive a user operation to move the tire set graphic 5 at the mounting position in the display screen to overlap the tire set graphic 5 located in another on-axle position. In the case a user operation to move the tire set graphic 5 to overlap the tire set graphic 5 is received, the tire set graphic 5 located in another on-axle position may be moved to the graphic C of the temporary placement location.

The user operation reception unit 33 may receive a user operation input of the operator to move the tire graphic 6 and the sensor graphic 7 individually to another mounting position or to the graphic C of the temporary placement location in the display screen. Further, the user operation reception unit 33 may receive a user operation input for horizontal flip when moving the tire set graphic 5 and the tire graphic 6.

The graphic movement unit 34 reflects the operator's user operation received by the user operation reception unit 33 in the display screen. For example, when the operator performs a user operation to move the tire set graphic 5 to the graphic C of the temporary placement location in the display screen, the graphic movement unit 34 moves the tire set graphic 5 to the graphic C of the temporary placement location.

The graphic movement unit 34 moves the tire set graphic 5 at the mounting position in the display screen to another mounting position where the tire set graphic 5 is not located. The graphic movement unit 34 moves the tire set graphic 5 in the graphic C of the temporary placement location in the display screen to a mounting position where the tire set graphic 5 is not located. In addition to the tire set graphic 5, the graphic movement unit 34 also moves the display of the mounting position, the tire graphic 6, the sensor graphic 7, and the wheel graphic 8 in the tire set graphic 5.

When the operator performs a user operation to move the tire graphic 6 and the sensor graphic 7 individually in the display screen, the graphic movement unit 34 moves the tire graphic 6 and the sensor graphic 7 to another mounting position or the graphic C of the temporary placement location.

When the graphic movement unit 34 moves the tire graphic 6 in association with the movement of the tire set graphic 5, or when the graphic movement unit 34 moves the tire graphic 6 alone, the graphic movement unit 34 displays the mounting positions before and after the movement in the tire set graphic 5.

When the operator performs a user operation for horizontal flip of the tire set graphic 5 and the tire graphic 6 in the display screen, the graphic movement unit 34 horizontally flips the side where the wheel graphic 8 is arranged in the tire graphic 6. Further, the tire graphic 6 includes the serial surface graphic 61, and the graphic movement unit 34 also horizontally flips the arrangement of the serial surface graphic 61 on the tire graphic 6 in association with horizontal flip of the tire graphic 6. The graphic movement unit 34 may change the display form when the arrangement of the serial surface graphic 61 is horizontally flipped. The graphic movement unit 34 may change the display form from, for example, black line segments to blue line segments when the arrangement of the serial surface graphic 61 is horizontally flipped.

The graphic movement unit 34 may have a function of storing, in the storage unit 20, a user operation performed in a simulated tire rotation in the display screen and reproducing the operator's user operation from the beginning. A further operator or the user of the vehicle can check the movement of the tire graphic 6, etc. reproduced by the graphic movement unit 34 or can work for actual tire rotation in a vehicle by reproducing and checking the movement.

The position management unit 35 causes the storage unit 20 to store, as the mounting status data 20c, the identification information on the tire indicated by the tire graphic 6, the orientation of the serial surface indicated by the serial surface graphic 61, the identification information on the sensor indicated by the sensor graphic 7, and the wheel orientation indicated by the wheel graphic 8, which correspond to each mounting position in the display screen after tire rotation. The storage unit 20 may rewrite the mounting status data 20c at each tire rotation or may maintain the data before tire rotation and add new data to keep a record of additions.

The information display unit 36 displays information on the tire and the sensor in the display screen in response to the user operation performed by the operator in the user operation unit 10. For example, the cursor indicating a location of the operator's user operation in the display screen moves as the operator manipulates the mouse device of the user operation unit 10. The position information on the cursor in the display screen is acquired by the user operation reception unit 33 and input to the information display unit 36. In a user operation input by using the touch panel, the location of the operator's user operation is, for example, a point on the touch panel where a touch by the operator is detected. Hereinafter, a case where a cursor is displayed in the display screen to indicate the location of a user operation will be described as an example.

When the cursor overlaps the tire graphic 6, the information display unit 36 reads out the tire specification corresponding to the tire graphic 6 from the specification data 20d and displays it in the display screen. When the cursor overlaps the sensor graphic 7, the information display unit 36 displays the mounting position of the sensor graphic 7 before the movement in the display screen. Further, when the cursor overlaps the sensor graphic 7, the information display unit 36 may read out the specification of the sensor corresponding to the sensor graphic 7 from the specification data 20d and display it in the display screen.

A description will now be given of the operation of the tire maintenance support apparatus 100. Fig. 4 is a flowchart showing steps of a tire rotation process performed by the tire maintenance support apparatus 100. The information addition unit 31 of the tire maintenance support apparatus 100 adds the identification information on the tire and the identification information on the sensor to the tire graphic 6 and the sensor graphic 7 displayed in the display screen (Sl). The graphic arrangement unit 32 arranges graphic elements such as the axle arrangement, the tire mounting position, the tire set graphic 5, the tire graphic 6, the sensor graphic 7, the wheel graphic 8, and the graphic C of the temporary placement location in the display screen (S2) .

The user operation reception unit 33 determines whether the end button has been pressed (S3). When it is determined that the end button has not been pressed (S3: NO), the user operation reception unit 33 proceeds to the next step S4. The end button is provided in, for example, the display screen, and the operator performs a user operation of pressing the end button in the display screen.

The user operation reception unit 33 receives a user operation input of the operator to move the tire set graphic 5, the tire graphic 6, and the sensor graphic 7 (S4). The graphic movement unit 34 moves the tire graphic, etc. at the tire mounting position and the temporary placement location in accordance with the operator's user operation received by the user operation reception unit 33, reflects the operator's user operation in the display screen (S5), and returns to step S3.

In step S3, the position management unit 35 causes the storage unit 20 to store, as the mounting status data 20c, the identification information on the tire indicated by the tire graphic 6, the orientation of the serial surface indicated by the serial surface graphic 61, the identification information on the sensor indicated by the sensor graphic 7, and the orientation of the wheel indicated by the wheel graphic 8 (S6), which correspond to each mounting position in the display screen after tire rotation, when it is determined that the end button has been pressed (S3: YES). The position management unit 35 then terminates the process.

The tire maintenance support apparatus 100 can simulate a tire rotation in visually easy-to-understand manner and support a tire rotation work, by receiving the operator's user operation related to the movement of the tire graphic in the user operation reception unit 33 and moving the tire graphic at the mounting position and the temporary placement location.

The tire maintenance support apparatus 100 can help the operator identify the tire and the sensor to be moved easily and improve work efficiency in a tire rotation in the display screen, by adding the respective identification information to the tire graphic 6 and the sensor graphic 7.

Further, the tire maintenance support apparatus 100 can provide data for understanding the status of movement of the tire and the sensor, by storing, as the mounting status data 20c, the identification information on the tire, orientation of the serial surface, identification information on the sensor, and orientation of the wheel at each mounting position after tire rotation.

Fig. 5 is a schematic diagram showing an example of tire rotation in the display screen, and Fig. 6 is a schematic diagram showing an arrangement of a tire graphic, etc. after tire rotation. In this example, as shown in Fig. 5, the tire set graphic 5 at the mounting position B12 is moved to the graphic C of the temporary placement location, the tire set graphic 5 at the mounting position B23 is moved to the mounting position B12, and the tire set graphic 5 formerly in the graphic C of the temporary placement location is moved to the mounting position B23. After completion of the tire rotation operation, the tire set graphic 5, etc. related to the movement are arranged as shown in Fig. 6.

Figs. 7A, 7B and 7C are schematic diagrams for illustrating a user operation to move graphic elements. As shown in Fig. 7A, the tire maintenance support apparatus 100 can select the tire set graphic 5 with the cursor and move the tire graphic 6, the sensor graphic 7, and the wheel graphic 8 collectively.

As shown in Fig. 7B, the tire maintenance support apparatus 100 can select only the tire graphic 6 with the cursor and move the tire graphic 6 alone. As shown in Fig. 7C, the tire maintenance support apparatus 100 can select only the sensor graphic 7 with the cursor and move the sensor graphic 7 alone.

Fig. 8 is a schematic diagram for illustrating a user operation to reverse the orientation of a tire. The user operation reception unit 33 receives an input of the operator manipulating a reversal button displayed in the display screen and outputs the input to the graphic movement unit 34. In certain cases, the graphic movement unit 34 horizontally flips the wheel graphic 8 provided on one side of the tire graphic 6 in a pre-movement state to the other side of the tire graphic 6 according to the mounting position after a user operation for movement. In other cases, the graphic movement unit 34 does not horizontally flip the wheel graphic 8. Further, the graphic movement unit 34 horizontally flips the arrangement of the serial surface graphic 61 in the tire graphic 6. In the example shown in Fig. 8, the arrangement of the serial surface graphic 61 is horizontally flipped as determined by the mounting position, based on the operator's user operation for horizontal flip, and the arrangement of the wheel graphic 8 is not horizontally flipped. The arrangement of the wheel graphic 8 is horizontally flipped depending on the post-movement mounting position. The tire maintenance support apparatus 100 can identify the horizontal orientation of the tire by moving the wheel graphic 8 and the serial surface graphic 61 along with the tire graphic 6 and can simulate a change in the orientation of the tire in an actual tire rotation in response to a user operation for horizontal flip. Further, the graphic movement unit 34 may recognize horizontal flip of the arrangement of both the serial surface graphic 61 and the wheel graphic 8 and horizontal flip of only one of the serial surface graphic 61 and the wheel graphic 8 are horizontal flips of different categories.

Fig. 9 is a schematic diagram showing an example of a display screen presented when the mounting positions before and after a movement are displayed. The graphic movement unit 34 may display the mounting positions before and after a movement in association with the moved tire graphic 6. Referring Fig. 9, the graphic movement unit 34 displays a movement from the mounting position B23 to B12 in the tire set graphic 5 at the mounting position B12 that the tire graphic 6 has moved to and displays a movement from the mounting position B12 to B23 in the tire set graphic 5 at the mounting position B23.

The tire maintenance support apparatus 100 can provide the operator with information on the mounting positions before and after a movement in an easy-to-understand manner by displaying the mounting positions before and after the movement in association with the moved tire graphic 6.

The information display unit 36 of the tire maintenance support apparatus 100 can present the specification of the tire arranged in the display screen by displaying the specification of the tire corresponding to the tire graphic 6 when the cursor manipulated by the operator in the display screen overlaps the tire graphic 6. Further, the information display unit 36 can let the operator know the mounting position of the sensor before the movement by displaying the mounting position of the sensor graphic 7 before the movement in the display screen when the cursor manipulated by the operator in the display screen overlaps the sensor graphic 7.

The graphic movement unit 34 may configure the display form of the graphic element moved to be different from the display form of the graphic element not moved. The graphic movement unit 34 changes the display form of the tire set graphic 5, the tire graphic 6, the serial surface graphic 61, the sensor graphic 7, and the wheel graphic 8 when they are moved.

Figs. 10A and 10B are schematic diagrams showing an example of changing the display form of the graphic element that has been moved. Figs. 10A and 10B show an example to move a tire from the mounting position B11 to B12. As shown in Fig. 10A, the graphic movement unit 34 changes the frame portion of the tire set graphic 5 to a color different from the color before movement when the tire set graphic 5 is moved. Further, as shown in Fig. 10B, the graphic movement unit 34 changes the outline of the tire set graphic 5 and the tire graphic 6 to a color different from the color before movement when the tire set graphic 5 is moved. The graphic movement unit 34 changes, for example, from black to blue. The change in the display form of the graphic element by the graphic movement unit 34 may not be limited to changing the color of the frame or the outline, but may also be filling the graphic with a color, changing the shape or line style, etc.

When the tire set graphic 5 is moved, the tire graphic 6, the serial surface graphic 61, the sensor graphic 7, and the wheel graphic 8 are moved together. Therefore, the graphic movement unit 34 may change the display form of the tire graphic 6, etc. like the tire set graphic 5. The graphic movement unit 34 may also define a user operation of horizontally flipping the arrangement of the serial surface graphic 61 and the wheel graphic 8 as a form of user operation for movement and change the display form of these graphics accordingly. The graphic movement unit 34 may differently change the display form of horizontal flips of different categories described above to let the operator know different horizontal flips.

The change in the display form of the tire graphic 6, the serial surface graphic 61, the sensor graphic 7, and the wheel graphic 8 includes a change in the display form of the graphic element surrounding these graphic elements, that is, the display form of the tire set graphic 5. The change in the display form of the tire graphic 6, the serial surface graphic 61, the sensor graphic 7, and the wheel graphic 8 may include a change in the display form such as the border color of the tire set graphic 5 that surrounds these graphic elements.

The tire maintenance support apparatus 100 can let the operator know the graphic element moved by the user operation in an easy-to-understand manner, reduce errors in maintenance work, and improve work efficiency, by changing the display form of the tire set graphic 5, the tire graphic 6, the serial surface graphic 61, the sensor graphic 7, and the wheel graphic 8 that have been moved.

Further, the graphic movement unit 34 changes the display form of the tire set graphic 5, the tire graphic 6, the serial surface graphic 61, the sensor graphic 7, and the wheel graphic 8 when moving the graphic element between mounting positions on the axle and moving the graphic element to the graphic C of the temporary placement location. The tire maintenance support apparatus 100 can let the operator know the graphic element being moved in a user operation in an easy-to-understand manner, by also changing the display form of the graphic element moved by way of the temporary placement location.

(Embodiment 2) Fig. 11 is a block diagram showing a functional configuration of the tire maintenance support apparatus 100 according to embodiment 2. In addition to the parts of the tire maintenance support apparatus 100 described in embodiment 1, the tire maintenance support apparatus 100 according to embodiment 2 includes a replacement determination unit 37 and a replacement extraction unit 38 in the control unit 30. Further, the tire maintenance support apparatus 100 stores wear state data 20e and replacement data 20f in the storage unit 20.

In embodiment 1, the configuration and function for supporting tire rotation work by the tire maintenance support apparatus 100 have been described. In embodiment 2, the configuration and function for supporting maintenance work for replacing a tire and a sensor by the tire maintenance support apparatus 100 will be described.

The wear state data 20e stored in the storage unit 20 comprises a measurement value in a periodic groove depth inspection of the tire. When there are four tire grooves in the width direction, for example, the tire groove depth inspection measures at four locations in the width direction, and further measures at three locations in the same groove in the circumferential direction and, for example, at intervals of 120°. As a result, the uneven wear state in the width direction or the circumferential direction of the tire is also stored in the wear state data 20e.

Further, the wear state data 20e may store, for example, the amount of wear estimated by using a learning-type arithmetic model. It is possible, equally in estimation of the amount of wear by a learning-type arithmetic model, to estimate a condition of uneven wear of the tire by estimating the remaining groove depth for each groove.

The replacement data 20f includes information on the tire such as the manufacturer, product name, model number, unique identification information, etc. of multiple new tires with different specifications and used tires in storage. In the replacement data 20f, information necessary for identifying a new tire and a used tire in storage may be stored, and the specification data 20d is referred to for a detailed specification such as performance. Used tires include winter tires and summer tires that are stored in areas where shoes are changed depending on the season.

The replacement data 20f includes information on the sensor such as the product name, model number, unique identification information, etc. for identifying a new sensor and a used sensor in storage. In the replacement data 20f, information necessary for identifying a new sensor and a used sensor in storage may be stored, and the specification data 20d may be referred to for a detailed specification such as performance.

Fig. 12 is a schematic diagram showing an example of a display screen for tire replacement work. The display screen for tire rotation and the display screen for tire and sensor replacement work are switched by, for example, arranging buttons indicating "tire rotation" and "replacement" in the display screen, and allowing the operator to press the button.

As in embodiment 1, the information addition unit 31 of the control unit 30 adds identification information to the tire graphic 6, etc. The graphic arrangement unit 32 arranges the tire graphic 6, etc. at the tire mounting position of the selected vehicle in the display screen. Further, the graphic arrangement unit 32 arranges a field for displaying the main specification of the tire and the sensor and a field for displaying a replacement candidate in the display screen. In the display screen for tire replacement work, the graphic element is not moved by the graphic movement unit 34.

The replacement determination unit 37 of the control unit 30 reads out the wear state of each tire corresponding to the tire graphic 6 arranged at the mounting position from the wear state data 20e stored in the storage unit 20. For each tire, the replacement determination unit 37 determines whether the tire should be replaced based on the wear state of the tire.

The replacement determination unit 37 determines that the tire should be replaced when the remaining groove depth of the tire groove is equal to or less than a prescribed value, or when the difference between the maximum value and the minimum value of the remaining groove depth resulting from uneven wear is equal to or more than a predetermined value. The replacement determination unit 37 outputs the identification information and the mounting position of the tire determined to be replaced to the graphic arrangement unit 32.

Further, the replacement determination unit 37 determines for each tire whether the sensor should be replaced. The replacement determination unit 37 determines that the sensor should be replaced when measurement data from the sensor is not available due to disconnection or when the sensor is faulty. The replacement determination unit 37 outputs the identification information and the mounting position of the sensor determined to be replaced to the graphic arrangement unit 32.

The graphic arrangement unit 32 displays the tire graphic 6 corresponding to the identification information and the mounting position of the tire determined to be replaced in a display form different from the tire graphic 6 corresponding to the tire not determined to be replaced. Further, the graphic arrangement unit 32 displays the sensor graphic 7 corresponding to the identification information and the mounting position of the sensor determined to be replaced in a display form different from the sensor graphic 7 corresponding to the sensor not determined to be replaced.

Displaying the tire graphic 6 and the sensor graphic 7 in a different display form includes displaying the graphic element surrounding these graphic elements, i.e., the tire set graphic 5, in a different display form. The display form of the graphic element can be changed by changing the color of the frame or the outline, filling the graphic with a color, changing the shape or line style, etc.

The replacement extraction unit 38 extracts a tire and a sensor that are replacement candidates in response to the user operation performed by the operator in the user operation unit 10. When the cursor in the display screen overlaps the tire graphic 6, the replacement extraction unit 38 extracts a tire that is a replacement candidate from the replacement data 20f. The tire extracted as a replacement candidate is, for example, one with an equivalent tire width, tire profile, rim diameter, etc.

When the cursor in the display screen overlaps the sensor graphic 7, the replacement extraction unit 38 extracts a sensor that is a replacement candidate from the replacement data 20f. The sensor extracted as a replacement candidate is, for example, one of the same manufacturer and product name or one with equivalent measurement performance.

The replacement extraction unit 38 outputs the tire and the sensor extracted as replacement candidates to the information display unit 36. The information display unit 36 displays the tire and the sensor that are replacement candidates in a filed in the display screen for displaying replacement candidates. Further, the information display unit 36 displays the specification of the tire and the sensor corresponding to the tire graphic 6 and the sensor graphic 7 that the cursor overlaps in a field for displaying the main specification of the tire and the sensor.

The replacement extraction unit 38 may also read out the wear state of the tire corresponding to the tire graphic 6 that the cursor overlaps from the wear state data 20e and extract a replacement candidate based on the wear state. In the case the amount of tire wear is large, for example, the replacement extraction unit 38 may preferentially extract a used tire with a small amount of wear. Further, the replacement extraction unit 38 may preferentially extract a used tire in which the uneven wear state of the tire is opposite. The replacement extraction unit 38 extracts, for example, a used tire with little center wear and much shoulder wear as a candidate to replace the tire in which center wear has progressed.

A description will now be given of the operation of the tire maintenance support apparatus 100 according to embodiment 2. Fig. 13 is a flowchart showing steps of a process for replacement work performed by the tire maintenance support apparatus 100. The information addition unit 31 of the tire maintenance support apparatus 100 adds the tire identification information and the sensor identification information to the tire graphic 6 and the sensor graphic 7 displayed in the display screen (S11). The graphic arrangement unit 32 arranges graphic elements such as the axle arrangement, the tire mounting position, the tire set graphic 5, the tire graphic 6, the sensor graphic 7, the wheel graphic 8, and the graphic C of the temporary placement location in the display screen (S12). When it is determined by the replacement determination unit 37 that the tire and the sensor should be replaced, the graphic arrangement unit 32 displays the corresponding tire graphic 6 and the corresponding sensor graphic 7 in a display form different from usual.

The user operation reception unit 33 determines whether the end button has been pressed (S13). When it is determined that the end button has not been pressed (S13: NO), the user operation reception unit 33 proceeds to the next step S14. When it is determined in step S13 that the end button has been pressed (S13: YES), the process is terminated. The end button is arranged, for example, in the display screen, and the operator performs a user operation of pressing the end button in the display screen.

The replacement extraction unit 38 determines whether the cursor in the display screen overlaps the graphic element of the tire graphic 6 and the sensor graphic 7 (S14). The determination in step S14 may determine whether the state in which the cursor overlaps the graphic element is maintained for a predetermined time or longer. When it is determined in step S14 that the cursor does not overlap the graphic element of the tire graphic 6 and the sensor graphic 7 (S14: NO), the process is continued by returning to step S13.

When it is determined in step S14 that the cursor overlaps the graphic element of the tire graphic 6 and the sensor graphic 7 (S14: YES), the replacement extraction unit 38 extracts a tire and a sensor that are replacement candidates corresponding to the tire graphic 6 and the sensor graphic 7 that the cursor overlaps (S15).

The information display unit 36 displays the main specification of the tire and the sensor corresponding to the graphic element that the cursor overlaps in the display screen (S16). Further, the information display unit 36 displays an extracted replacement candidate in the display screen (S17). After step S17, the control unit 30 returns to step S13 to continue the process, and, when it is determined that the end button is pressed in step S13 (S13: YES), the process is terminated.

As shown in Fig. 12, the tire maintenance support apparatus 100 extracts a tire that is a replacement candidate and displays the candidate in the display screen. The tire maintenance support apparatus 100 can reduce errors in the selection of a replacement product in maintenance work for tire replacement and improve work efficiency, by extracting a candidate to replace the tire corresponding to the tire graphic 6 that the cursor overlaps in the display screen and displaying the candidate in the display screen.

Fig. 14 is a schematic diagram showing an example of a display screen for sensor exchange. As shown in Fig. 14, the tire maintenance support apparatus 100 extracts a sensor that is a replacement candidate and displays the candidate in the display screen. The tire maintenance support apparatus 100 can reduce errors in the selection of a replacement in sensor replacement maintenance work and improve work efficiency, by extracting a candidate to replace the sensor corresponding to the sensor graphic 7 that the cursor overlaps in the display screen and displaying the candidate in the display screen.

The replacement extraction unit 38 extracts replacement candidates from new tires used tires in storage stored in the replacement data 20f. This allows the tire maintenance support apparatus 100 to extract replacement candidates efficiently from the database built to include used tires.

Further, the replacement determination unit 37 of the tire maintenance support apparatus 100 determines whether the tire should be replaced. The graphic arrangement unit 32 displays the tire graphic 6 corresponding to the tire determined to be replaced in the display screen in a display form different from the tire graphic determined not to be replaced. The tire maintenance support apparatus 100 displays the tire graphic 6 corresponding to the tire determined to be replaced in a different display form and so can let the operator easily know the tire that should be replaced.

Further, the replacement extraction unit 38 extracts a replacement candidate based on the wear state of the tire corresponding to the tire graphic that the cursor overlaps. As described above, the tire maintenance support apparatus 100 can extract a used tire with a small amount of wear or a used tire in which the state of uneven wear is opposite as a candidate and present the tire to the operator as a replacement candidate.

In the above-described example, the tire maintenance support apparatus 100 extracts a replacement candidate when the cursor manipulated by the operator overlaps the tire graphic 6 and the sensor graphic 7. The tire maintenance support apparatus 100 may extract a tire that is a replacement candidate when the cursor manipulated by the operator overlaps the tire set graphic 5. Further, overlap of the cursor over the tire graphic 6 may be considered to include a case where the cursor overlaps the tire set graphic 5.

The tire maintenance support apparatus 100 may extract a tire that is a replacement candidate when the cursor manipulated by the operator overlaps the tire graphic 6 and, further, when the tire graphic 6 is selected by a click of a mouse device, etc. Further, the tire maintenance support apparatus 100 may extract a sensor that is a replacement candidate when the cursor manipulated by the operator overlaps the sensor graphic 7 and, further, when the sensor graphic 7 is selected by a click of a mouse device, etc. In the case of a user operation using a touch panel, the tire maintenance support apparatus 100 may extract a tire or a sensor that is a replacement candidate in response to any of various forms of operation such as touch and a long press on the panel.

A description will now be given of characteristics of the tire maintenance support program and the tire maintenance support apparatus according to the embodiments. A tire maintenance support program causes a computer to execute an information addition step, a graphic arrangement step, a user operation reception step, and a graphic movement step. The information addition step adds, to a tire graphic 6 representing a tire mounted on a vehicle, identification information on the tire, and adds, to a sensor graphic 7 representing a sensor provided in the tire, identification information on the sensor. The graphic arrangement step arranges the tire graphic 6 and the sensor graphic 7 in the display screen based on axle arrangement information. The user operation reception step receives a user operation to move at least one of the tire graphic 6 or the sensor graphic 7 arranged by the graphic arrangement step. The graphic movement step moves at least one of the tire graphic 6 or the sensor graphic 7 according to a mounting position of the tire on an axle based on a user operation received by the user operation reception step. According to this tire maintenance support program, the user can easily identify a tire or a sensor to be moved, reduce errors in tire maintenance work, and improve work efficiency.

The graphic arrangement step also arranges the wheel graphic 8 indicating the two sides of the wheel mounted on the tire in the display screen in association with the tire graphic 6. The graphic movement step moves the wheel graphic 8 along with the tire graphic 6. According to this tire maintenance support program, the orientation of the tire in the horizontal direction can be identified, and a user operation for horizontal flip can be received to simulate the change in the orientation of the tire in an actual tire rotation.

Further, the graphic arrangement step arranges a serial surface graphic 61 indicating a side surface engraved with serial information on the tire in the display screen in association with the tire graphic 6. The graphic movement step moves the serial surface graphic 61 along with the tire graphic 6. According to this tire maintenance support program, the orientation of the tire in the horizontal direction can be identified, and a user operation for horizontal flip can be received to simulate the change in the orientation of the tire in an actual tire rotation.

Further, the graphic movement step displays mounting positions before and after a movement in association with the moved tire graphic 6. According to this tire maintenance support program, it is possible to provide the user with information on the mounting positions before and after a movement in an easy-to-understand manner.

There is also provided an information displaying step of displaying the mounting position of the sensor before a movement when the sensor graphic overlaps a location of a user operation in the display screen. According to this tire maintenance support program, it is possible to let the user know the mounting position of the sensor before the movement.

There is also provided an information displaying step of displaying a tire specification when the tire graphic 6 overlaps a location of a user operation in the display screen. According to this tire maintenance support program, the specification of the tire arranged in the display screen can be presented.

A tire maintenance support apparatus 100 includes an information addition unit 31, a graphic arrangement unit 32, a user operation reception unit 33, and a graphic movement unit 34. The information addition unit 31 adds, to a tire graphic 6 representing a tire mounted on a vehicle, identification information on the tire, and adds, to a sensor graphic 7 representing a sensor provided in the tire, identification information on the sensor. The graphic arrangement unit 32 arranges the tire graphic 6 and the sensor graphic 7 in a display screen based on axle arrangement information. The user operation reception unit 33 receives a user operation to move at least one of the tire graphic 6 or the sensor graphic 7 arranged by the graphic arrangement unit 32. The graphic movement unit 34 moves, based on the user operation received by the user operation reception unit 33, at least one of the tire graphic 6 or the sensor graphic 7 according to a mounting position of the tire on an axle. This allows the tire maintenance support apparatus 100 to help the user identify the tire and the sensor to be moved easily, reduce errors in tire maintenance work, and improve work efficiency.

A tire maintenance support program causes a computer to execute a graphic arrangement step, a user operation reception step, and a graphic movement step. The graphic arrangement step arranges a tire graphic 6 representing a tire mounted on a vehicle and a sensor graphic 7 representing a sensor provided in the tire in the display screen based on axle arrangement information. The user operation reception step receives a user operation to move the tire graphic 6 and the sensor graphic 7 arranged by the graphic arrangement step. The graphic movement step moves, based on the user operation received by the user operation reception step, at least one of the tire graphic 6 or the sensor graphic 7 according to a mounting position of the tire on an axle, and changes a display form of a moved graphic. According to this tire maintenance support program, the user can easily know the graphic element moved by the user operation, reduce errors in maintenance work, and improve work efficiency.

Further, the graphic arrangement step arranges a graphic C representing a temporary placement location of the tire in the display screen. The graphic movement step changes a display form for a graphic moved to the temporary placement location. According to this tire maintenance support program, it is possible to let the user know the graphic element being moved by a user operation for movement in an easy-to-understand manner by changing the display form even for the graphic element moved by way of the temporary placement location.

Further, the graphic movement step changes a color attached to the moved graphic. According to this tire maintenance support program, user visibility of the moved graphic can be improved.

Further, the graphic movement step displays the mounting position before a movement in association with the moved tire graphic 6. According to this tire maintenance support program, it is possible to provide the user with information on the mounting position before the movement in an easy-to-understand manner.

A tire maintenance support apparatus 100 includes a graphic arrangement unit 32, a user operation reception unit 33, and a graphic movement unit 34. The graphic arrangement unit 32 arranges a tire graphic 6 representing a tire mounted on a vehicle and a sensor graphic 7 representing a sensor provided in the tire in the display screen based on axle arrangement information. The user operation reception unit 33 accepts a user operation to move the tire graphic 6 and the sensor graphic 7 arranged by the graphic arrangement unit 32. The graphic movement unit 34 moves, based on the user operation received by the user operation reception unit 33, at least one of the tire graphic 6 or the sensor graphic 7 according to a mounting position of the tire on an axle, and changes a display form of a moved graphic. This allows the tire maintenance support apparatus 100 to let the user know the graphic element moved by the user operation in an easy-to-understand manner, reduce errors in maintenance work, and improve work efficiency.

A tire maintenance support program causes a computer to execute an information addition step, a graphic arrangement step, a replacement extraction step, and an information display step. The information addition step adds, to a tire graphic 6 representing a tire mounted on a vehicle, identification information on the tire. The graphic arrangement step arranges the tire graphic 6 in the display screen based on axle arrangement information. The replacement extraction step extracts a candidate to replace the tire corresponding to the tire graphic 6 overlapping a location of a user operation in the display screen. The information display step displays information on a replacement candidate extracted by the replacement extraction step in the display screen. According to this tire maintenance support program, it is possible to reduce errors in the selection of a replacement product in maintenance work for tire replacement and improve work efficiency.

Further, the replacement extraction step extracts a replacement candidate based on a wear state of the tire corresponding to the tire graphic 6 overlapping the location of a user operation. According to this tire maintenance support program, it is possible to extract a used tire with a small amount of wear or a used tire in which the state of uneven wear is opposite as a candidate, and to present the tire to the user as a replacement candidate.

Further, the replacement extraction step extracts a replacement candidate from new tires and used tires in storage. According to this tire maintenance support program, it is possible to extract a replacement candidate efficiently from a database built to include used tires.

The tire maintenance support program further includes a replacement determination step that determines whether the tire should be replaced. The graphic arrangement step displays the tire graphic 6 corresponding to a tire determined to be replaced by the replacement determination step in a display form different from the tire graphic 6 corresponding to a tire not determined to be replaced. According to this tire maintenance support program, it is possible to let the user know a tire to be replaced easily.

Further, the information addition step adds, to a sensor graphic 7 representing a sensor provided in the tire, identification information on the sensor. The graphic arrangement step arranges the sensor graphic 7 in the display screen. The replacement extraction step extracts a replacement candidate for a sensor corresponding to the sensor graphic 7 overlapping a location of a user operation in the display screen. According to this tire maintenance support program, it is possible to reduce errors in the selection of a replacement product in maintenance work for sensor replacement and to improve work efficiency. The tire maintenance support program may be used as a rotation recommendation function prior to rotation or replacement. In other words, the tire maintenance support program can also be used on a computer as a function that recommends an optimal rotation according to the condition of the tire at each mounting position before rotation or replacement. According to this tire maintenance support program, it is possible to order materials, prepare tires, etc., and to improve work efficiency. When this tire maintenance support program is used after rotation, it is possible to save a tire movement history and track a wear history. There may also be provided, a work instruction step to instruct, when the information addition step is completed, ordering a selected replacement product or shipping it from a ware house, and attaching a work instruction document to the selected sensor or the selected tire, the work instruction document indicating a vehicle identification number, a work date, and the mounting position (including the direction of mounting) in the vehicle. Errors of the user in the work can be further reduced, and work efficiency can be improved.

A tire maintenance support apparatus 100 includes an information addition unit 31, a graphic arrangement unit 32, a replacement extraction unit 38, and an information display unit 36. The information addition unit 31 adds, to a tire graphic 6 representing a tire mounted on a vehicle, identification information on the tire. The graphic arrangement unit 32 arranges the tire graphic 6 in the display screen based on axle arrangement information. The replacement extraction unit 38 extracts a candidate to replace the tire corresponding to the tire graphic 6 overlapping a location of a user operation in the display screen. The information display unit 36 displays information on a replacement candidate extracted by the replacement extraction unit 38 in the display screen. This allows the tire maintenance support apparatus 100 to reduce errors in the selection of a replacement product in maintenance work for tire replacement and improve work efficiency.

Given above is an explanation based on embodiments of the present disclosure. The embodiments are intended to be illustrative only and it will be understood to those skilled in the art that variations and modifications are possible within the claim scope of the present disclosure and that such variations and modifications are also within the claim scope of the present disclosure. Accordingly, the description and drawings in the specification shall be interpreted as being illustration instead of limitation.

## Claims

1. A tire maintenance support program comprising computer-implemented modules including:
an information addition module that adds, to a tire graphic (6) representing a tire mounted on a vehicle, identification information on the tire, and adds, to a sensor graphic (7) representing a sensor provided in the tire, identification information on the sensor;
a graphic arrangement module that arranges the tire graphic (6) and the sensor graphic (7) in the display screen based on axle arrangement information;
a user operation reception module that receives a user operation to move at least one of the tire graphic (6) or the sensor graphic (7) arranged by the graphic arrangement module; and
a graphic movement module that moves at least one of the tire graphic (6) or the sensor graphic (7) according to a mounting position of the tire on an axle based on a user operation received by the user operation reception module.

2. The tire maintenance support program according to claim 1,
wherein the graphic arrangement module arranges a wheel graphic (8) indicating two sides of the wheel mounted on the tire in the display screen in association with the tire graphic (6), and
wherein the graphic movement modules moves the wheel graphic (8) along with the tire graphic (6).

3. The tire maintenance support program according to claim 1 or 2,
wherein the graphic arrangement module arranges a serial surface graphic (61) indicating a side surface engraved with serial information on the tire in the display screen in association with the tire graphic (6), and
wherein the graphic movement module moves the serial surface graphic (61) along with the tire graphic (6).

4. The tire maintenance support program according to any one of claims 1 through 3,
wherein the graphic movement module displays mounting positions before and after a movement in association with the moved tire graphic (6).

5. The tire maintenance support program, according to any one of claims 1 through 4, further comprising:
an information displaying module that displays the mounting position of the sensor before a movement when the sensor graphic (7) overlaps a location of a user operation in the display screen.

6. The tire maintenance support program according to any one of claims 1 through 5, further comprising:
an information displaying module that displays a tire specification when the tire graphic (6) overlaps a location of a user operation in the display screen.

7. The tire maintenance support program according to any one of claims 1 through 6,
wherein the graphic movement module changes a display form for a moved graphic, based on the user operation received by the user operation reception module.

8. The tire maintenance support program according to claim 7,
wherein the graphic arrangement module arranges a graphic representing a temporary placement location of the tire in the display screen, and
wherein the graphic movement module changes a display form for a graphic moved to the temporary placement location.

9. The tire maintenance support program according to claim 7 or 8,
wherein the graphic movement module changes a color attached to the moved graphic.

10. The tire maintenance support program according to any one of claims 7 through 9,
wherein the graphic movement module displays the mounting position before a movement in association with the moved tire graphic (6).

11. The tire maintenance support program according to any one of claims 1 through 10, further comprising:
a replacement extraction module that extracts a candidate to replace a tire corresponding to the tire graphic (6) overlapping a location of a user operation in the display screen; and
an information display module that displays information on a replacement candidate extracted by the replacement extraction module in the display screen.

12. The tire maintenance support program according to claim 11,
wherein the replacement extraction module extracts a replacement candidate based on a wear state of the tire corresponding to the tire graphic (6) overlapping the location of a user operation.

13. The tire maintenance support program according to claim 11 or 12,
wherein the replacement extraction module extracts a replacement candidate from new tires and used tires in storage.

14. The tire maintenance support program according to any one of claims 11 through 13, further comprising:
a replacement determination module that determines whether the tire should be replaced,
wherein the graphic arrangement module displays the tire graphic (6) corresponding to a tire determined to be replaced by the replacement determination module in a display form different from the tire graphic (6) corresponding to a tire not determined to be replaced.

15. The tire maintenance support program according to any one of claims 11 through 14,
wherein the information addition module adds, to a sensor graphic (7) representing a sensor provided in the tire, identification information on the sensor,
wherein the graphic arrangement module arranges the sensor graphic (7) in the display screen, and
wherein the replacement extraction module extracts a replacement candidate for a sensor corresponding to the sensor graphic (7) overlapping a location of a user operation in the display screen.
